# EUROPÄISCHE PATENTSCHRIFT

(11) **EP 1 678 994 B1**
(45) Veröffentlichungstag und Bekanntmachung des Hinweises auf die Patenterteilung: **26.05.2010**
(21) Anmeldenummer: 05028066.8
(22) Anmeldetag: 21.12.2005
(51) Int. Cl.: A01B 51/02

(54) **Ackerschlepper mit einem Fahrgestell**
Tractor with frame
Tracteur à chassis

(30) Priorität: 07.01.2005 DE 102005000936
(43) Veröffentlichungstag der Anmeldung: 12.07.2006
(73) Patentinhaber: REBO Landmaschinen GmbH, 49429 Visbeck (DE)
(72) Erfinder: Kuhlmann, Ignatz, 49685 Emsteck (DE)
(74) Vertreter: Jabbusch, Matthias

(56) Entgegenhaltungen:
- DE-A1- 4 137 282
- DE-B- 1 057 971
- DE-B- 1 090 457
- DE-C- 911 674
- NL-C1- 1 021 880
- US-A- 2 796 140

## Beschreibung

Die Erfindung betrifft einen Ackerschlepper mit einem Fahrgestell, einer darauf angeordneten Fahrerkabine, einem frontseitig vor der Fahrerkabine angeordneten Motorraum mit einem darin angeordneten Motor und mit einer vom Motor antreibbaren Hydraulik, wobei das Fahrgestell einen nach vorn über den Motorraum hinausstehenden Teilabschnitt aufweist.

Bekannte Ackerschlepper werden auch als Traktoren oder Trecker bezeichnet und dienen vornehmlich zum Zug und zum Antrieb landwirtschaftlicher Maschinen und Arbeitsgeräte. Die frontseitige Anordnung des Motorraumes hat sich insbesondere aus Gründen der Wartungsfreundlichkeit auf dem Markt durchgesetzt. Obwohl derartige Ackerschlepper als Multifunktionsschlepper für den Antrieb diverser Maschinen konzipiert sind, werden in einigen Bereichen dennoch weniger wartungsfreundliche Sonderbauformen benötigt, die beispielsweise als Front- und Mittelsitztraktoren, Geräteträger, Weinbau- und Plantagentraktoren, Hoflader oder Forsttraktoren bekannt sind.

Ein Ackerschlepper der vorbezeichneten Gattung ist aus der DE 1 090 457 B bekannt. Dieser Ackerschlepper hat ein Fahrgestell, einen an dem Fahrgestell angehängten Motorraum mit einem darin angeordneten Motor und mit einer vom Motor antreibbaren Hydraulik, wobei das Fahrgestell einen nach vorn über den Motorraum hinausstehenden Teilabschnitt aufweist. Jedoch ist dort keine Fahrerkabine vorhanden.

Bei diesem bekannten Ackerschlepper besteht das Fahrgestell aus einer Profilkonstruktion, bei der einzelne Profile mit Hilfe von Schellen miteinander verbunden sind. Dieses Fahrgestell ist flexibel, da es eine Verschiebung des Motors am Fahrgestell ermöglicht.

Der Erfindung liegt die Aufgabe zugrunde, einen vor dem Motorraum befindlichen Teilabschnitt des Fahrgestells so zu nutzen, dass der Ackerschlepper nicht nur als Ackerschlepper für Zugzwecke geeignet ist, sondern auch in den Einsatzbereich von Sonderbauformen hinein erweitert ist.

Diese Aufgabe ist erfindungsgemäß, und wie beansprucht, dadurch gelöst, dass das Fahrgestell als stabile Rahmenkonstruktion ausgeführt ist und dass an dem Teilabschnitt eine Aufnahmeeinrichtung zur Aufnahme wenigstens eines Arbeitsgerätes angeordnet ist und dass die Batterie für den dem Motor zugeordneten Anlasser außerhalb des Motorraumes angeordnet ist.

Bei dem erfindungsgemäßen Ackerschlepper weist das Fahrgestell einen nach vorn über den Motorraum hinausstehenden Teilabschnitt auf, an dem eine Aufnahmeeinrichtung zur Aufnahme wenigstens eines Arbeitsgerätes angeordnet ist. Dabei ist es von besonders großem Vorteil, wenn der Teilabschnitt des Fahrgestells nach vorn bis über die Vorderräder des Ackerschleppers hinaussteht. Da das als stabile Rahmenkonstruktion ausgeführte Fahrgestell seiner eigentlichen Aufgabe nach zur Aufnahme der Achskonstruktionen für die Laufräder und zur Aufnahme von Motor und Getriebe vorgesehen ist, ist es besonders belastungsfähig und ermöglicht vorteilhaft auch die Aufnahme schwerer Arbeitsgeräte sowie hoher Betriebskräfte durch die Arbeitsgeräte.

Um den Motorraum weiter zu verkleinern, ist außerhalb des Motorraumes außerdem eine Batterie für einen dem Motor zugeordneten Anlasser angeordnet. Dazu wird vorgeschlagen, die Batterie ebenfalls an der Unterseite der Fahrerkabine im Bereich der Kühlereinheit anzuordnen.

Nach einer ersten Weiterbildung der Erfindung weist die Aufnahmeeinrichtung Anschlagmittel zur Aufnahme wenigstens eines als Ladeplattform ausgebildeten Arbeitsgerätes auf. Die Anschlagmittel sind derart zueinander angeordnet, dass sie eine sichere und belastungsfähige Lagerung der Ladeplattform ermöglichen. Mit der Ladeplattform ist der erfindungsgemäße Ackerschlepper zusätzlich besonders für Garten- und Straßenbaubetriebe geeignet, bei denen schweres oder empfindliches Ladegut auf engem Raum zu handhaben ist.

Nach einer nächsten Weiterbildung weist die Ladeplattform einen den Motorraum frontseitig begrenzenden Mittelteil und zwei den Motorraum seitlich einfassende Seitenteile auf. Die Ladeplattform kann somit problemlos von der Fahrerkabine aus eingesehen werden. Mit den den Motorraum seitlich einfassenden Seitenteilen weist die Ladefläche eine maximal große Grundplatte bei frontseitig minimal kleiner Ausladung auf. Die Breite der Ladeplattform entspricht etwa der äußeren Spurbreite der Vorderräder, so dass die Abmessungen und damit die Wendigkeit eines bekannten Ackerschleppers erhalten bleiben.

Nach einer anderen Weiterbildung weist die Ladeplattform ihre Grundplatte kastenartig begrenzende Bordwände auf. Diese dienen in erster Linie zur Sicherung von auf der Ladeplattform befindlicher Ladung. Die Höhe der Bordwände entspricht maximal dem Maß zwischen den höchsten Punkten der Vorderräder und dem höchsten Punkt der den Motorraum abdeckenden Motorhaube. Damit weist die Ladeplattform eine maximale Höhe auf, ohne die Frontsicht aus der Fahrerkabine nennenswert einzuschränken.

Günstigerweise sind die Bordwände als in die Ebene der Grundplatte schwenkbare Bordwandklappen ausgebildet. Damit besteht vorteilhaft die Möglichkeit, die Grundfläche der Ladeplattform um die Summe der Flächen der Bordwandklappen zu vergrößern. Der Vorteil der schwenkbaren Bordwandklappen besteht somit darin, dass auf der Ladeplattform auch besonders sperriges Ladegut transportiert werden kann, dass über die Grundplatte der Ladeplattform hinaussteht.

Zum Ankippen der Ladeplattform weist die Hydraulik wenigstens einen an der Aufnahmeeinrichtung angeordneten Kippkraftheber auf. Dieser vereinfacht maßgeblich das Entladen und Reinigen der Ladeplattform. Der Kippkraftheber weist mit Vorteil zwei Hydraulikzylinder auf, die am Fahrgestell oder an dem über den Motorraum hinausstehenden Teilabschnitt des Fahrgestells angelenkt sind.

Weiterhin weist die Hydraulik einen unterhalb der Anschlagmittel angeordneten Frontkraftheber zur Aufnahme diverser Arbeitsgeräte auf. Mit dieser Anordnung wird es möglich, den vorzugsweise als Dreipunktaufhängung ausgebildeten Frontkraftheber auch dann betreiben zu können, wenn von der Aufnahmeeinrichtung das als Ladeplattform ausgebildete Arbeitsgerät aufgenommen ist. Mit dem Frontkraftheber korrespondierende Arbeitsgeräte sind beispielsweise Bürsten, Laubsauger, Mähvorrichtungen aller Art oder Schneepflüge.

Weiterhin weist die Hydraulik eine am Motorraum angeordnete Hubeinrichtung für einen Frontlader auf, die ebenfalls bei von der Aufnahmeeinrichtung aufgenommener Ladeplattform einsatzfähig ist. Der Frontlader ist bevorzugt derart ausgebildet, dass eine an der Aufnahmeeinrichtung angeordnete Ladeplattform innerhalb seines Arbeitsfeldes liegt. Auf diese Weise besteht die Möglichkeit einer effizienten Handhabung von auf der Ladeplattform befindlicher Ladung.

Nach einer besonders vorteilhaften Weiterbildung der Erfindung weist die Aufnahmeeinrichtung einen unterhalb der Anschlagmittel angeordneten Drehkranz mit vertikaler Drehachse zur Aufnahme diverser Arbeitsgeräte auf. Der Abstand zwischen dem Drehkranz und der Bodenplatte einer in der Aufnahmeeinrichtung aufgenommenen Ladeplattform weist bevorzugt ein Maß auf, dass das Betreiben von Arbeitsgeräten mit niedriger Aufbauhöhe auch bei an der Aufnahmeeinrichtung aufgenommener Ladeplattform erlaubt. Dabei kann es erforderlich sein, die Ladeplattform zumindest während des Aufbauvorganges der Arbeitsgeräte auf den Drehkranz mittels der Kippkraftheber anzukippen. Das Anbauen und das Betreiben von Arbeitsgeräten mit größeren Aufbauhöhen erfordert hingegen ein vorheriges Abbauen des als Ladeplattform ausgebildeten Arbeitsgerätes von der Aufnahmeeinrichtung. Mit dem Drehkranz korrespondierende Arbeitsgeräte sind beispielsweise Hubarbeitsbühnen, Salzstreuer, Kräne und Mähvorrichtungen aller Art.

Um die Aufnahmeeinrichtung zur Aufnahme möglichst großer Arbeitsgeräte ausbilden zu können, ist außerhalb des Motorraumes wenigstens eine Kühlereinheit angeordnet. Dabei definiert sich der Motorraum durch den von einer Motorhaube oder anderen Karosserieteilen abgedeckten Bauraum, der maßgeblich zur Aufnahme des Motors geschaffen ist.

Nach einer nächsten Weiterbildung der Erfindung ist die Kühlereinheit vorzugsweise auf der dem Einstieg in die Fahrerkabine gegenüberliegenden Unterseite der Fahrerkabine angeordnet. Damit ist die Kühlereinheit separat bzw. beabstandet vom Motor angeordnet, so dass der Motorraum vorteilhaft verkleinert ist.

Zur Wärmeabfuhr ist der Kühlereinheit erfindungsgemäß ein elektrisch angetriebener Lüfter zugeordnet. Der Lüfter wird mit Vorteil von der bordeigenen Lichtmaschine mit elektrischer Energie versorgt. Grundsätzlich ist es jedoch ebenso denkbar, den Lüfter über Riementriebe direkt mit vom Motor zur Verfügung gestellter Bewegungsenergie zu versorgen.

Die für den erfindungsgemäßen Ackerschlepper vorgesehene Kühlereinheit besteht aus einem dem Motor zugeordneten Wasserkühler, einem Getriebeölkühler und einem Frigenkühler für eine der Fahrerkabine zugeordnete Klimaanlage. Dabei liegt es selbstverständlich im Rahmen der Erfindung, dass die Kühlereinheit auch weniger Kühlaggregate oder sogar weitere Kühlaggregate aufweist.

Eine zusätzliche Verkleinerung des Motorraumes ergibt sich daraus, daß außerhalb des Motorraumes weiterhin ein Luftfilter für den Motor angeordnet ist. Gemäß der Erfindung wird vorgeschlagen, den Luftfilter an der Außenseite der Fahrerkabine, insbesondere an einer einem Auspuffrohr gegenüberliegenden Seite in der Fahrerkabine anzuordnen.

Ein Ausführungsbeispiel der Erfindung, aus dem sich weitere erfinderische Merkmale ergeben, ist in der Zeichnung dargestellt. Es zeigen:
- Fig. 1: eine Seitenansicht eines erfindungsgemäßen Ackerschleppers; und
- Fig. 2: eine Draufsicht auf den in Fig. 1 dargestellten Ackerschlepper.

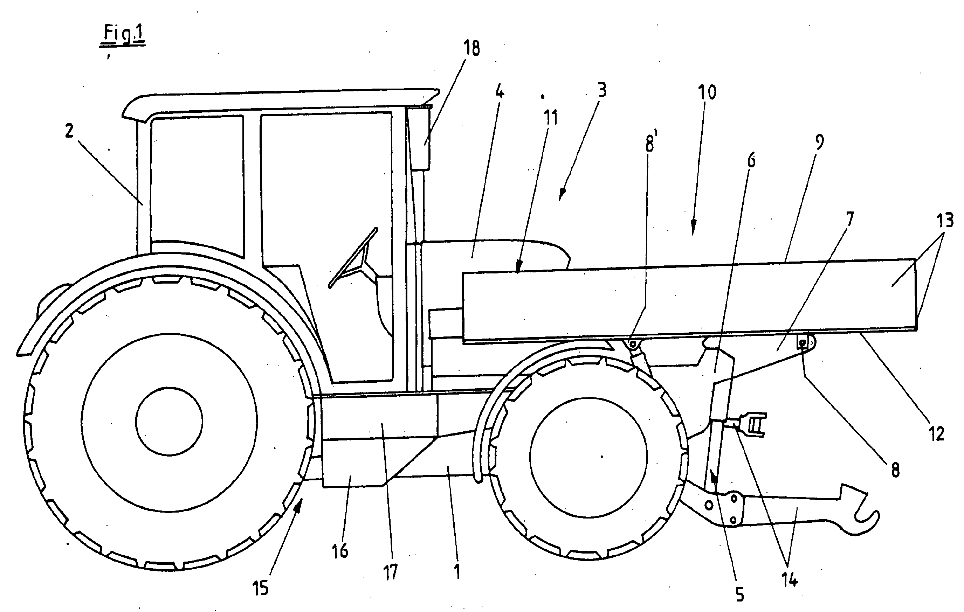

Die Fig. 1 zeigt einen erfindungsgemäßen Ackerschlepper mit einem Fahrgestell 1, einer darauf angeordneten Fahrerkabine 2, einem frontseitig vor der Fahrerkabine 2 angeordneten Motorraum 3 mit einem darin angeordneten Motor 4 und mit einer vom Motor 4 antreibbaren Hydraulik 5. Das Fahrgestell 1 weist einen nach vorn über den Motorraum 3 hinausstehenden Teilabschnitt 6 auf, an dem eine Aufnahmeeinrichtung 7 angeordnet ist. Die Aufnahmeeinrichtung 7 weist Anschlagmittel 8, 8' auf, an denen ein als Ladeplattform ausgebildetes Arbeitsgerät 9 angeschlagen ist. Das als Ladeplattform ausgebildete Arbeitsgerät 9 weist einen den Motorraum 3 frontseitig begrenzenden Mittelteil 10 und zwei den Motorraum 3 seitlich einfassende Seitenteile 11 auf. Außerdem weist das als Ladeplattform ausgebildete Arbeitsgerät 9 seine Grundplatte 12 kastenartig begrenzende Bordwände 13 auf. Die Bordwände 13 sind als in die Ebene der Grundplatte 12 schwenkbare Bordwandklappen ausgebildet. Die Hydraulik 5 weist den Anschlagmitteln 8' der Aufnahmeeinrichtung 7 zugeordnete Kippkraftheber zum Ankippen des als Ladeplattform ausgebildeten Arbeitsgerätes 9 auf. Außerdem weist die Hydraulik einen unterhalb der Anschlagmittel 8, 8' angeordneten Frontkraftheber 14 auf, der als Dreipunktaufhängung ausgebildet ist. Außerhalb des Motorraumes 3 ist an der Unterseite 15 der Fahrerkabine 2 eine Kühlereinheit 16 mit einem elektrisch angetriebenen Lüfter angeordnet. Weiterhin ist außerhalb des Motorraumes 3 an der Unterseite 15 der Fahrerkabine 2 eine Batterie 17 für einen dem Motor 4 zugeordneten Anlasser angeordnet und ebenfalls außerhalb des Motorraumes 3 ist außenseitig an der Fahrerkabine 2 ein Luftfilter 18 für den Motor 4 angeordnet.

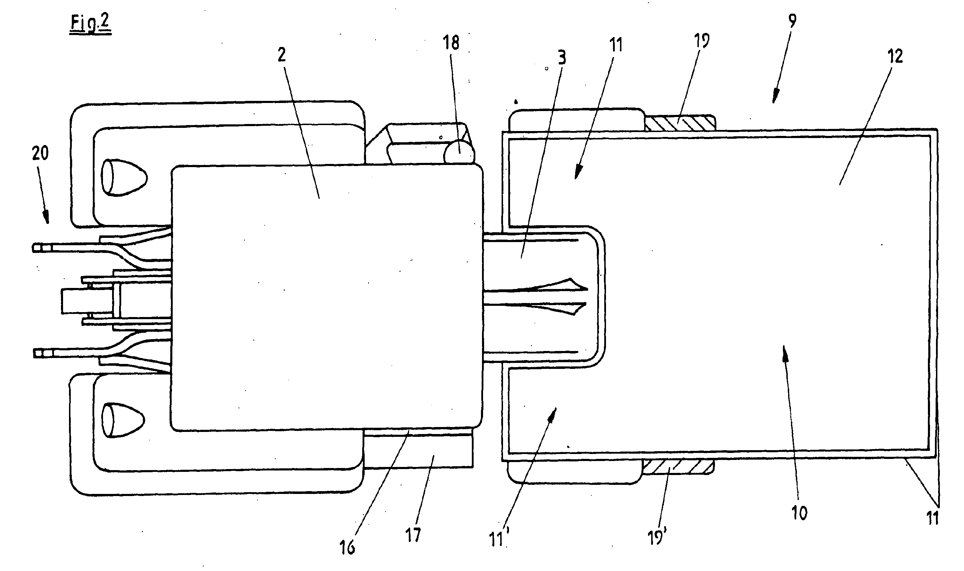

Die Fig. 2 zeigt eine Draufsicht des in Fig. 1 dargestellten Ackerschleppers. In dieser Ansicht wird deutlich, daß das als Ladeplattform ausgebildete Arbeitsgerät 9 einen den Motorraum 3 frontseitig begrenzenden Mittelteil 10 und zwei dem Motorraum 3 seitliche einfassende Seitenteile 11 aufweist. Die Breite des Arbeitsgerätes 9 entspricht etwa der äußeren Spurbreite der Vorderräder 19, 19'. Die die Vorderräder 19, 19' verbindende Achse liegt frontseitig vor dem Motorraum 3. Außerdem weist der erfindungsgemäße Ackerschlepper einen hydraulischen Heckkraftheber 20 auf, der ebenfalls als Dreipunktaufhängung ausgebildet ist. Gleiche Bauteile sind mit gleichen Bezugszahlen versehen.

## Patentansprüche

1. Ackerschlepper mit einem Fahrgestell (1), einer darauf angeordneten Fahrerkabine, einem frontseitig vor der Fahrerkabine angeordneten und vom Fahrgestell (1) aufgenommenen Motorraum mit einem darin angeordneten Motor und mit einer vom Motor antreibbaren Hydraulik, wobei das Fahrgestell (1) einen nach vorn über den Motorraum hinausstehenden Teilabschnitt (6) aufweist,
**dadurch gekennzeichnet,**
**dass** das Fahrgestell (1) als stabile Rahmenkonstruktion ausgeführt ist und dass an dem Teilabschnitt (6) eine Aufnahmeeinrichtung (7) zur Aufnahme wenigstens eines Arbeitsgerätes (9) angeordnet ist und dass die Batterie für den dem Motor zugeordneten Anlasser außerhalb des Motorraumes angeordnet ist.

2. Ackerschlepper nach Anspruch 1, **dadurch gekennzeichnet, dass** die Aufnahmeeinrichtung (7) Anschlagmittel (8, 8') zur Aufnahme wenigstens eines als Ladeplattform ausgebildeten Arbeitsgerätes (9) aufweist.

3. Ackerschlepper nach Anspruch 2, **dadurch gekennzeichnet, dass** das als Ladeplattform ausgebildete Arbeitsgerät (9) einen den Motorraum (3) frontseitig begrenzenden Mittelteil (10) und zwei den Motorraum seitlich einfassende Seitenteile (11) aufweist.

4. Ackerschlepper nach einem der Ansprüche 2 und 3, **dadurch gekennzeichnet, dass** das als Ladeplattform ausgebildete Arbeitsgerät (9) seine Grundplatte (12) kastenartig begrenzende Bordwände (13) aufweist.

5. Ackerschlepper nach Anspruch 4, **dadurch gekennzeichnet, dass** die Bordwände (13) als in die Ebene der Grundplatte (12) schwenkbare Bordwandklappen ausgebildet sind.

6. Ackerschlepper nach einem der Ansprüche 2 bis 5, **dadurch gekennzeichnet, dass** die Hydraulik (5) wenigstens einen an der Aufnahmeeinrichtung (7) angeordneten Kippkraftheber zum Ankippen des als Ladeplattform ausgebildeten Arbeitsgerätes (9) aufweist.

7. Ackerschlepper nach einem der Ansprüche 2 bis 6, **dadurch gekennzeichnet, dass** die Hydraulik (5) einen unterhalb der Anschlagmittel (8, 8') angeordneten Frontkraftheber (14) zur Aufnahme diverser Arbeitsgeräte aufweist.

8. Ackerschlepper nach einem der Ansprüche 1 bis 7, **dadurch gekennzeichnet, dass** die Hydraulik (5) eine am Motorraum (3) angeordnete Hubeinrichtung für einen Frontlader aufweist.

9. Ackerschlepper nach einem der Ansprüche 2 bis 8, **dadurch gekennzeichnet, dass** die Aufnahmeeinrichtung (7) einen unterhalb der Anschlagmittel (8, 8') angeordneten Drehkranz mit vertikaler Drehachse zur Aufnahme diverser Arbeitsgeräte aufweist.

10. Ackerschlepper nach einem der Ansprüche 1 bis 9, **dadurch gekennzeichnet, dass** außerhalb des Motorraumes (3) wenigstens eine Kühlereinheit (16) angeordnet ist.

11. Ackerschlepper nach Anspruch 10, **dadurch gekennzeichnet, dass** die Kühlereinheit (16) an der Unterseite (15) der Fahrerkabine (2) angeordnet ist.

12. Ackerschlepper nach einem der Ansprüche 10 und 11, **dadurch gekennzeichnet, dass** der Kühlereinheit (16) ein elektrisch angetriebener Lüfter (18) zugeordnet ist.

13. Ackerschlepper nach einem der Ansprüche 10 bis 12, **dadurch gekennzeichnet, dass** die Kühlereinheit (16) einen dem Motor (4) zugeordneten Wasserkühler aufweist.

14. Ackerschlepper nach einem der Ansprüche 10 bis 13, **dadurch gekennzeichnet, dass** die Kühlereinheit (16) einen Getriebeölkühler aufweist.

15. Ackerschlepper nach einem der Ansprüche 10 bis 14, **dadurch gekennzeichnet, dass** die Kühlereinheit (16) einen Frigenkühler für eine der Fahrerkabine (2) zugeordnete Klimaanlage aufweist.

16. Ackerschlepper nach einem der vorhergehenden Ansprüche, **dadurch gekennzeichnet, dass** die Batterie (17) an der Unterseite (15) der Fahrerkabine (2) angeordnet ist.

17. Ackerschlepper nach einem der Ansprüche 1 bis 16, **dadurch gekennzeichnet, dass** außerhalb des Motorraumes (3) wenigstens ein Luftfilter (18) für den Motor (4) angeordnet ist.

18. Ackerschlepper nach Anspruch 17, **dadurch gekennzeichnet, dass** der Luftfilter (18) an der Außenseite der Fahrerkabine (2) angeordnet ist.

## Claims

1. Agricultural tractor with chassis (1), a driver cabin provided thereon, a front-mounted engine compartment arranged in front of the driver cabin and received by the chassis (1) with an engine provided therein and with a hydraulic system, which can be power-operated by an engine, with the chassis (1) showing a body section (6) projecting forward beyond the engine compartment,
**is characterised by the fact that,**
the chassis (1) is designed as a sturdy frame and that a reception unit is provided in the body section (6) for receiving at least one tool (9) and that the battery for the starter associated with the engine is provided outside the engine compartment.

2. Agricultural tractor according to claim 1, **characterised by** the fact that the holding device (7) has slinging equipment (8, 8') for receiving at least one tool (9) arranged as platform for loading.

3. Agricultural tractor according to claim 2, **characterised by** the fact that the tool (9) arranged as platform for loading has a middle part (10) limiting the engine compartment (3) at the front and two side parts (11) laterally lining the engine compartment.

4. Agricultural tractor according to one of the claims 2 and 3, **characterised by** the fact that the tool (9) arranged as platform for loading has side panels limiting its base (12) in a box-like way.

5. Agricultural tractor according to claim 4, **characterised by** the fact that the side panels (13) are arranged as side panel flaps pivotably mounted in the plane of the base (12).

6. Agricultural tractor according to one of the claims 2 to 5, **characterised by** the fact that the hydraulic system (5) has at least one tilting force lift provided in the holding device for tipping the tool (9) arranged as platform for loading.

7. Agricultural tractor according to one of the claims 2 to 6, **characterised by** the fact that the hydraulic system (5) has a front force lift (14) provided below the slinging equipment (8, 8') for receiving diverse tools.

8. Agricultural tractor according to one of the claims 1 to 7, **characterised by** the fact that the hydraulic system (5) has a lifting device for front-loaders provided in the engine compartment (3).

9. Agricultural tractor according to one of the claims 2 to 8, **characterised by** the fact that the holding device (7) has a slew ring provided below the slinging equipment (8, 8') with vertical rotation axis for receiving diverse tools.

10. Agricultural tractor according to one of the claims 1 to 9, **characterised by** the fact that at least one cooling unit (16) is provided outside the engine compartment (3).

11. Agricultural tractor according to claim 10, **characterised by** the fact the cooling unit (16) is provided at the lower surface (15) of the driver cabin (2).

12. Agricultural tractor according to one of the claims 10 and 11, **characterised by** the fact that the cooling unit (16) is associated with an electrically powered fan (18).

13. Agricultural tractor according to one of the claims 10 to 12, **characterised by** the fact that the cooling unit (16) has a water cooler associated with the engine (4).

14. Agricultural tractor according to one of the claims 10 to 13, **characterised by** the fact that the cooling unit (16) has a transmission oil cooler.

15. Agricultural tractor according to one of the claims 10 to 14, **characterised by** the fact that the cooling unit (16) has a Frigen cooler for an air-conditioning system associated with the driver cabin (2).

16. Agricultural tractor according to one of the preceding claims, **characterised by** the fact that the battery (17) is provided at the lower surface (15) of the driver cabin (2).

17. Agricultural tractor according to one of the claims 1 to 16, **characterised by** the fact that at least one air filter (18) for the engine (4) is provided outside the engine compartment (3).

18. Agricultural tractor according to claim 17, **characterised by** the fact that the air filter (18) is provided on the outside of the driver cabin (2).

## Revendications

1. Tracteur agricole avec un châssis (1), une cabine arrangée au-dessus, un compartiment pour le moteur arrangé de front devant la cabine et qui est reçu par le châssis (1), avec un moteur arrangé dedans et une hydraulique automotrice, avec le châssis (1) présentant une section (6) débordante en devant sur le compartiment pour le moteur,
**est caractérisé en ce que**
le châssis (1) est exécuté en tant que cadre support solide et que la section (6) présente un dispositif de réception (7) pour recevoir au moins un outillage (9), et que la batterie pour le démarreur, qui est attribuée au moteur, est arrangée hors du compartiment pour le moteur.

2. Tracteur agricole selon la revendication 1, **caractérisé en ce que** le dispositif de réception (7) présente des accessoires de levage et d'arrimage (8, 8') pour recevoir au moins un outillage (9) sous forme de plate-forme de chargement.

3. Tracteur agricole selon la revendication 2, **caractérisé en ce que** l'outillage (9) arrangé en tant que plate-forme de chargement présente une pièce centrale (10), ainsi limitant le compartiment pour le moteur (3) de front, ainsi que deux parties latérales (11) bordant le compartiment pour le moteur latéralement.

4. Tracteur agricole selon une des revendications 2 et 3, **caractérisé en ce que** l'outillage (9), arrangé en tant que plate-forme de chargement, présente des parois de bord, ainsi limitant son plateau de base (12), qui est réalisé en forme de caisse.

5. Tracteur agricole selon la revendication 4, **caractérisé en ce que** les parties latérales (13) sont arrangées en tant que clapets de paroi de bord pivotants dans le plan du plateau de base (12).

6. Tracteur agricole selon une des revendications 2 à 5, **caractérisé en ce que** le système hydraulique (5) présente au moins un élévateur de force de basculement, qui est arrangé dans le dispositif de réception (7) pour basculer l'outillage (9), et qui existe en tant que plate-forme de chargement.

7. Tracteur agricole selon une des revendications 2 à 6, **caractérisé en ce que** le système hydraulique (5) présente un élévateur de force en frontal (14), arrangé au-dessous des accessoires de levage et d'arrimage (8, 8'), pour recevoir des outillages divers.

8. Tracteur agricole selon une des revendications 1 à 7, **caractérisé en ce que** le système hydraulique (5) présente une unité de levage pour chargeurs frontaux, qui est arrangée dans le compartiment pour le moteur (3).

9. Tracteur agricole selon une des revendications 2 à 8, **caractérisé en ce que** le dispositif de réception (7) présente un connecteur de tournant arrangé au-dessous des accessoires de levage et d'arrimage (8, 8'), avec un axe de rotation vertical pour recevoir des outillages divers.

10. Tracteur agricole selon une des revendications 1 à 9, **caractérisé en ce qu'**au moins un système de ventilation (16) est arrangé hors du compartiment pour le moteur (3).

11. Tracteur agricole selon la revendication 10, **caractérisé en ce que** le système de ventilation (16) est arrangé en sous face (15) de la cabine (2).

12. Tracteur agricole selon une des revendications 10 et 11, **caractérisé en ce que** le système de ventilation (16) est attribué à un ventilateur fonctionnant électriquement (18).

13. Tracteur agricole selon une des revendications 10 à 12, **caractérisé en ce que** le système de ventilation (16) présente un refroidisseur à eau qui est attribué au moteur (4).

14. Tracteur agricole selon une des revendications 10 à 13, **caractérisé en ce que** le système de ventilation (16) présente un refroidisseur d'huile de graissage.

15. Tracteur agricole selon une des revendications 10 à 14, **caractérisé en ce que** le système de ventilation (16) présente un refroidisseur Frigen pour une climatisation attribuée à la cabine (2).

16. Tracteur agricole selon une des revendications précédentes, **caractérisé en ce que** la batterie (17) est arrangée en sous face (15) de la cabine (2).

17. Tracteur agricole selon une des revendications 1 à 16, **caractérisé en ce qu'**au moins un filtre à air (18) pour le moteur (4) est arrangé hors du compartiment pour le moteur (3).

18. Tracteur agricole selon la revendication 17, **caractérisé en ce que** le filtre à air (18) est arrangé en face externe de la cabine (2).
